# EUROPÄISCHE PATENTSCHRIFT

(11) **EP 3 028 326 B1**
(45) Veröffentlichungstag und Bekanntmachung des Hinweises auf die Patenterteilung: **30.05.2018**
(21) Anmeldenummer: 14749754.9
(22) Anmeldetag: 31.07.2014
(51) Int. Cl.: H01M 4/04, H01M 4/20, H01M 4/73

(54) **VERFAHREN UND ANLAGE ZUR HERSTELLUNG EINER ELEKTRODENPLATTE, ELEKTRODENPLATTE UND ELEKTROCHEMISCHER AKKUMULATOR**
METHOD AND INSTALLATION FOR PRODUCING AN ELECTRODE PLATE, ELECTRODE PLATE AND RECHARGEABLE ELECTROCHEMICAL BATTERY
PROCÉDÉ ET INSTALLATION POUR FABRIQUER UNE PLAQUE D'ÉLECTRODE, PLAQUE D'ÉLECTRODE ET ACCUMULATEUR ÉLECTROCHIMIQUE

(30) Priorität: 01.08.2013 DE 102013108266
(43) Veröffentlichungstag der Anmeldung: 08.06.2016
(73) Patentinhaber: Johnson Controls Autobatterie GmbH & Co. KGaA, 30419 Hannover (DE)
(72) Erfinder: REICH, Tatjana, 31535 Neustadt (DE)
(74) Vertreter: Trinks, Ole
(86) Internationale Anmeldenummer: PCT/EP2014/066515
(87) Internationale Veröffentlichungsnummer: WO 2015/014946

(56) Entgegenhaltungen:
- DE-A1- 4 300 462
- DE-A1-102007 005 816
- JP-A- S 579 067
- JP-A- S5 893 161
- JP-A- S6 251 156
- JP-A- H07 183 028
- US-A- 4 417 608

## Beschreibung

Die Erfindung betrifft ein Verfahren zur Herstellung einer Elektrodenplatte eines elektrochemischen Akkumulators gemäß dem Oberbegriff des Anspruchs 1. Die Erfindung betrifft außerdem eine Anlage zur Herstellung einer derartigen Elektrodenplatte gemäß Anspruch 8, eine Elektrodenplatte gemäß Anspruch 9 sowie einen elektrochemischen Akkumulator gemäß Anspruch 10. Allgemein betrifft die Erfindung das Gebiet elektrochemischer Akkumulatoren mit plattenförmigen Batterieelektroden, die auch als Elektrodenplatten bezeichnet werden. Solche Akkumulatoren werden insbesondere als Blei-Säure-Akkumulatoren gefertigt. Die Säure bildet dabei einen flüssigen Elektrolyten. Je nach Ausführungsform des Akkumulators kann der flüssige Elektrolyt ungebunden oder in einem faserartigen Material gebunden sein. Im letzteren Fall kann ein solcher Akkumulator als AGM-Akkumulator ausgebildet sein, wobei AGM für Absorbent Glass Mat steht. Bei solchen Akkumulatoren kann zumindest ein Teil der Elektrodenplatten, in der Regel die positive Elektrodenplatte, mit einem Mikroglasvlies-Separator bedeckt sein, z.B. in der Art, dass bei der Herstellung des Akkumulators die Elektrodenplatte in dem Mikroglasvlies-Separator eingetascht wird, ähnlich wie beim Einpacken eines Geschenks.

Bei solchen Akkumulatoren ist es erwünscht, dass die Elektrodenplatten bei der erstmaligen Befüllung des Akkumulators mit dem flüssigen Elektrolyten möglichst schnell und gleichmäßig mit dem Elektrolyten benetzt werden. Je nach Herstelltechnologie der Elektrodenplatten kann deren Elektrolytaufnahmefähigkeit unterschiedlich ausfallen. Die Druckschriften DE 43 00 462 A1, US 4 417 608 A, JP S58 93161 A, JP H07 183028 A, JP S62 51156 A, JP S57 9067 A und DE 10 2007 005816 A1 offenbaren aus dem Stand der Technik bekannte Verfahren zur Herstellung einer Elektrodenplatte. Der Erfindung liegt daher die Aufgabe zugrunde, ein Verfahren zur Herstellung einer Elektrodenplatte anzugeben, die eine verbesserte Elektrolytaufnahmefähigkeit aufweist, möglichst unabhängig von der Herstelltechnologie der Elektrodenplatte. Ferner soll eine hierfür vorteilhafte Anlage konzipiert zur Herstellung einer Elektrodenplatte, eine Elektrodenplatte sowie ein elektrochemischer Akkumulator mit einer solchen Elektrodenplatten angegeben werden.

Diese Aufgabe wird gemäß Anspruch 1 gelöst durch ein Verfahren zur Herstellung einer Elektrodenplatte eines elektrochemischen Akkumulators mit den in folgender Reihenfolge ausgeführten Schritten:
a) Herstellen eines im Wesentlichen ebenen Bleigitters mit einer Vielzahl von Gitterstäben und einer Vielzahl von zwischen den Gitterstäben gebildeten fensterartigen Aussparungen,
b) Einbringen aktiver Masse in die Aussparungen und/oder auf die Gitterstäbe des Bleigitters,
c) Erzeugen eines Musters spaltförmiger Vertiefungen in der aktiven Masse dadurch gekennzeichnet, dass das Muster spaltförmiger Vertiefungen in der aktiven Masse durch mechanisches Beaufschlagen des mit der aktiven Masse versehenen Bleigitters erfolgt, und zwar derart, dass die Vertiefungen von der äußeren Oberfläche der aktiven Masse aus in die Tiefe gehen, und dass das Muster spaltförmiger Vertiefungen eine unregelmäßige, netzwerkartige Struktur bildet. An dieser Stelle ist angemerkt, dass mit der erfindungsgemäßen Lösung Vertiefungen in der aktiven Masse erzeugt werden, wobei diese Vertiefungen von der äußeren Oberfläche der aktiven Masse aus in die Tiefe gehen. Solche Vertiefungen sind beispielsweise Risse, insbesondere Druck- oder Spannungsrisse in der aktiven Masse, oder aber auch spaltenförmige Vertiefungen, die durch die mechanische Beaufschlagung des mit der aktiven Masse versehenen Bleigitters entstehen. Wie es anschließend näher beschrieben wird, lässt sich die Rissstruktur in besonders einfacher und leicht zu realisierender Weise herstellen, wenn die aktive Masse bereits zumindest leicht ausgehärtet ist. Die "äußere Oberfläche" der aktiven Masse, von der die Vertiefungen aus in die Tiefe gehen, entspricht dabei im Wesentlichen der äußeren Oberfläche der aktiven Masse, nachdem die aktive Masse in die Aussparungen und/oder auf die Gitterstäbe des Bleigitters eingebracht wurde.

Durch das mittels mechanischer Beaufschlagung erzeugte Muster spaltförmiger Vertiefungen kann die Elektrolytaufnahmefähigkeit der Elektrodenplatte deutlich verbessert werden. Insbesondere positive Elektrodenplatten, bei denen das Bleigitter mittels eines Stanzprozesses hergestellt wird, zeigen deutliche Verbesserungen, da diese ansonsten eine relativ glatte Oberfläche der aktiven Masse haben. Mittels der Erfindung kann generell aber bei jeder Art von Elektrodenplatte, unabhängig von der Herstelltechnologie, eine verbesserte Elektrolytaufnahmefähigkeit und eine gleichmäßigere Elektrolytbenetzung der aktiven Masse erzielt werden. Die Erfindung eignet sich daher auch vorteilhaft für Elektrodenplatten, bei denen das Bleigitter z.B. in einem Gießverfahren hergestellt wird. Die Erfindung eignet sich sowohl für positive als auch für negative Elektrodenplatten. So können mit der Erfindung insbesondere Akkumulatoren besser gefertigt werden, bei denen die Elektrodenplatten eng aneinander gepresst im Akkumulatorgehäuse angeordnet sind.

Die mittels der mechanischen Beaufschlagung erzeugten Vertiefungen gehen von der äußeren Oberfläche der aktiven Masse aus in die Tiefe der aktiven Masse. Die Vertiefungen bilden damit sozusagen feine Risse in der ansonsten eher gleichförmigen Oberfläche der aktiven Masse. Vorteilhaft ist es, wenn die Vertiefungen zumindest 0,5 bis 1 mm in die Tiefe gehen. Die Vertiefungen können die aktive Masse auch ganz durchdringen, d.h. bis zum Bleimaterial des Bleigitters gehen. Dies ist aber nicht unbedingt erforderlich. Die Tiefe der Vertiefungen muss nicht über die Längserstreckung der Vertiefungen gleich sein und kann auch bei verschiedenen Vertiefungen unterschiedlich sein.

Das Muster spaltförmiger Vertiefungen kann auf verschiedene Arten erzeugt werden. So kann eine mechanische Beaufschlagung der aktiven Masse durch eine Art Stempel erfolgen. Der Stempel kann bereits entsprechende erhabene Strukturen aufweisen, die den zu erzeugenden Vertiefungen entsprechen. Bei der Erzeugung des Musters spaltförmiger Vertiefungen auf den einander gegenüberliegenden mit aktiver Masse versehenen Seiten der Elektrodenplatte kann auch mit zwei Stempeln gearbeitet werden, zwischen denen die Elektrodenplatte angeordnet wird. Die Stempel werden dann relativ zueinander aufeinander zu bewegt und pressen die Elektrodenplatte zwischen einander, wodurch auf beiden Seiten der Elektrodenplatte ein Muster spaltförmiger Vertiefungen erzeugt wird.

Das Muster spaltförmiger Vertiefungen kann auch durch Verformen des mit der aktiven Masse versehenen Bleigitters erfolgen. Hierbei kann vorteilhaft die voneinander abweichende Elastizität der verwendeten Materialien genutzt werden, nämlich des Bleimaterials und des aktive Masse-Materials. Insbesondere trocknet bzw. härtet die zunächst pastöse aktive Masse aus, so dass sie relativ spröde wird, zumindest im Vergleich zum weicheren Bleimaterial. Beim Verformen des mit der aktiven Masse versehenen Bleigitters kann das Bleimaterial die Verformungsbewegungen ohne Weiteres mitmachen, ohne beschädigt zu werden. Hierbei erfolgt aber eine Art Aufbrechen der Oberflächenstruktur der aktiven Masse, so dass sich die gewünschte Rissstruktur bildet, d.h. ein Muster spaltförmiger Vertiefungen in der aktiven Masse. Versuche haben gezeigt, dass es ausreicht, das mit der aktiven Masse versehene Bleigitter einmal oder zweimal hin- und herzubiegen. Bereits dann ist die gewünschte Rissstruktur erzeugt.

Auch eine Kombination der genannten Verfahrensschritte zur Erzeugung des Musters spaltförmiger Vertiefungen ist vorteilhaft. Die mechanische Beaufschlagung kann z.B. durch ein Beaufschlagungswerkzeug oder von Hand erfolgen. Der beim mechanischen Beaufschlagen auf das mit der aktiven Masse versehene Bleigitter ausgeübte Druck sollte so reguliert sein, dass gerade die gewünschten Vertiefungen entstehen, die aktive Masse aber sich nicht vom Bleigitter löst oder das Bleigitter Schaden nimmt. Da das Bleigitter selbst relativ weich und verformbar ist, die aktive Masse aber vergleichsweise spröde, nimmt das Bleigitter bei korrekter Einstellung des ausgeübten Drucks keinen Schaden, die festere aktive Masse bekommt aber eine Rissstruktur.

Gemäß einer vorteilhaften Weiterbildung der Erfindung ist vorgesehen, dass das Muster spaltförmiger Vertiefungen nur durch Verformen des mit der aktiven Masse versehenen Bleigitters, nur durch mechanische Beaufschlagung der aktiven Masse oder nur durch eine Kombination dieser Alternativen erfolgt. Dies erlaubt eine schnelle und rationelle Erzeugung des Musters spaltförmiger Vertiefungen. Auch der apparative Aufwand wird in Grenzen gehalten. Eine Anlage zur Herstellung einer Elektrodenplatte bedarf dafür nur weniger, kostengünstiger Ergänzungen.

Gemäß einer vorteilhaften Weiterbildung der Erfindung erfolgt das Erzeugen des Musters spaltförmiger Vertiefungen bei oder nach der Vortrocknung oder bei oder nach dem Curing der aktiven Masse. Dies hat den Vorteil, dass die aktive Masse dann schon etwas härter und spröder ist und sich die gewünschte Rissstruktur leichter und schneller erzeugen lässt. Als Curing bezeichnet man bei der Akkumulatorherstellung das endgültige Aushärten der aktiven Masse, wie er bei der fertigen Elektrodenplatte vorliegt.

Gemäß einer vorteilhaften Weiterbildung der Erfindung erfolgt die mechanische Beaufschlagung durch abgerundete Profilkonturen und/oder scharfkantige Profile. Insbesondere bei Verwendung der zuvor genannten Stempel können diese an ihrer Oberfläche scharfkantige Profile aufweisen. Die Verwendung abgerundeter Profilkonturen hat den Vorteil, dass die Erzeugung des Musters spaltförmiger Vertiefungen relativ schonend erfolgen kann und unerwünschte Beschädigungen an der Elektrodenplatte noch besser vermieden werden können. Es wird insbesondere vermieden, dass durch die mechanische Beaufschlagung weder aktive Masse von der Elektrodenplatte verloren geht, z.B. aus einzelnen fensterartigen Aussparungen herausfällt oder herausgedrückt wird. Als abgerundete Profilkontur kann insbesondere ein Wellenprofil, z.B. in Form versetzter Rollenbänder, einzelne zylindrische Rollen oder Kugeln bzw. Halbkugeln verwendet werden.

Soweit es sich um scharfkantige Profile handelt, können diese z.B. messer- oder nadelförmig sein, z.B. in Form eines Nadelkissens oder eines Netzwerks von Messern.

Gemäß einer vorteilhaften Weiterbildung der Erfindung weist das Beaufschlagungswerkzeug zur mechanischen Beauschlagung des mit der aktiven Masse versehenen Bleigitters daher Rollen, Walzen und/oder Kugeln bzw. Halbkugeln auf, oder einen Ober- und einen Unterstempel, zwischen denen das mit der aktiven Masse versehene Bleigitter gepresst wird.

Gemäß einer vorteilhaften Weiterbildung der Erfindung wird bei der mechanischen Beaufschlagung das mit der aktiven Masse versehene Bleigitter mit einer kontinuierlichen Bewegung relativ zu einem Beaufschlagungswerkzeug bewegt. Das Beaufschlagungswerkzeug führt dabei die mechanische Beaufschlagung des mit der aktiven Masse versehenen Bleigitters durch. So kann das Bleigitter z.B. durch ein in Form versetzter Rollenbänder ausgebildetes Beaufschlagungswerkzeug kontinuierlich hindurch gezogen oder geschoben werden. Die genannte Bewegung kann auch diskontinuierlich erfolgen, derart, dass das mit der aktiven Masse versehene Bleigitter während der mechanischen Beaufschlagung ortsfest ist und vor und nach der mechanischen Beaufschlagung relativ zu dem Beaufschlagungswerkzeug bewegt wird. Dies ist insbesondere vorteilhaft, wenn das Muster spaltförmiger Vertiefungen durch die bereits erwähnten Stempel eingebracht wird. In diesem Fall kann das zu bearbeitende Bleigitter automatisch in eine Bearbeitungsstation, in der die Stempel angeordnet sind, gefahren werden, die Stempel dann zum Einsatz gebracht werden, und anschließend nach dem Wiederentfernen der Stempel das mit dem Muster spaltförmiger Vertiefungen versehene Bleigitter aus der Bearbeitungsstation entfernt werden.

Gemäß einer vorteilhaften Weiterbildung der Erfindung werden die Vertiefungen in horizontaler Erstreckungsrichtung und/oder in vertikaler Erstreckungsrichtung der Elektrodenplatte erzeugt, jeweils bezogen auf die Einbaulage der Elektrodenplatte in einem elektrochemischen Akkumulator in spezifikationsgemäßer Normallage des Akkumulators. Die spezifikationsgemäße Normallage des Akkumulators ist in der Regel eine horizontale Anordnung des Bodens des Akkumulators. Die Vertiefungen können auch kombiniert in horizontaler und vertikaler Erstreckungsrichtung verlaufen, d.h. diagonal in unterschiedlichen Winkeln.

Das Muster spaltförmiger Vertiefungen bildet dabei erfindungsgemäß eine unregelmäßige, netzwerkartige Struktur. Die einzelnen Vertiefungen können ineinander übergehen, sich kreuzen oder separat von anderen Vertiefungen verlaufen.

Die eingangs genannte Aufgabe wird gemäß Anspruch 8 ferner gelöst durch eine Anlage konzipiert zur Herstellung einer Elektrodenplatte eines elektrochemischen Akkumulators, wobei die Elektrodenplatte ein im Wesentlichen ebenes Bleigitter mit einer Vielzahl von Gitterstäben und einer Vielzahl von zwischen den Gitterstäben gebildeten fensterartigen Aussparungen und in die Aussparungen und/oder auf die Gitterstäbe des Bleigitters eingebrachte aktive Masse aufweist, wobei die Anlage wenigstens eine Bleigitter-Erzeugungsstation konzipiert zur Herstellung des Bleigitters, eine Pastierstation konzipiert zur Einbringung der aktiven Masse und eine Vertiefungsbildungsstation aufweist, dadurch gekennzeichnet dass, die Vertiefungsbildungsstation zum Erzeugen eines Musters spaltförmiger Vertiefungen in der aktiven Masse durch mechanisches Beaufschlagen des mit der aktiven Masse versehenen Bleigitters konzipiert ist, und zwar derart, dass die Vertiefungen von der äußeren Oberfläche der aktiven Masse aus in die Tiefe gehen, und dass das Muster spaltförmiger Vertiefungen eine unregelmäßige, netzwerkartige Struktur bildet. Vorteilhaft können hierbei die Anlagenteile Bleigitter-Erzeugungsstation und Pastierstation von beim Hersteller solcher Elektrodenplatten vorhandenen Anlagen weiter verwendet werden. Es ist lediglich eine Vertiefungsbildungsstation zu ergänzen. Diese weist unter anderem ein Beaufschlagungswerkzeug zum mechanischen Beaufschlagen des mit der aktiven Masse versehenen Bleigitters auf. Das Beaufschlagungswerkzeug kann insbesondere gemäß den zuvor erläuterten Ausführungsformen ausgebildet sein. Mit der genannten Anlage können vorteilhaft eines oder mehrere der zuvor erläuterten Verfahren zur Herstellung einer Elektrodenplatte durchgeführt werden. Dementsprechend kann mit der Anlage eine Elektrodenplatte gefertigt werden, die die eingangs genannten Vorteile aufweist, insbesondere die verbesserte Elektrolytaufnahmefähigkeit.

Gemäß einer vorteilhaften Weiterbildung der Erfindung weist zumindest die Vertiefungsbildungsstation eine Einhausung auf, die die Elektrodenplatte wenigstens während des mechanischen Beaufschlagens von der Umgebung abschirmt. Dies hat den Vorteil, dass die Umgebung von bei der Erzeugung der spaltförmigen Vertiefungen eventuell austretenden Schadstoffen, wie z.B. Bleistaub, abgeschirmt wird.

Gemäß einer vorteilhaften Weiterbildung der Erfindung weist die Anlage eine Plattenglättstation auf, die hinsichtlich des Verarbeitungsablaufs nach der Vertiefungsbildungsstation angeordnet ist. Die auf der Anlage bearbeiteten Elektrodenplatten erreichen somit nach der Bearbeitung in der Vertiefungsbildungsstation die Plattenglättstation. In der Plattenglättstation werden die Elektrodenplatten vor einer Weiterverarbeitung wieder äußerlich geglättet. Dies hat den Vorteil, dass die Elektrodenplatten damit wieder kompatibel zu weiteren Herstellungsprozessschritten sind und diese ohne Änderung des Herstellungsprozesses durchlaufen können. Hierbei bleibt das Muster spaltförmiger Vertiefungen in der aktiven Masse aber erhalten.

Die Plattenglättstation kann zusammen mit der Vertiefungsbildungsstation in der oben beschriebenen Einhausung angeordnet sein.

Die Vertiefungsbildungsstation kann in der Anlage dort angeordnet werden, wo die Elektrodenplatten nach dem Curing das erste Mal vereinzelt werden, z.B. direkt vor der Taschenmaschine, in der die Elektrodenplatten in das Separatormaterial eingetascht werden. Die dort vorhandene Plattenvereinzelung kann z.B. in die Vertiefungsbildungsstation gehen und von dort in den Taschenmaschinen-Einzug. Da bei solchen Anlagen an dieser Stelle bereits für den Schutz der Mitarbeiter vor Bleistaub gesorgt ist, sind keine zusätzlichen Ergänzungen für eine Bleistaubabsaugung erforderlich. Die Vertiefungsbildungsstation kann grundsätzlich überall im Herstellprozess nach dem Pastieren, d.h. nach dem Einbringen der aktiven Masse, bis zu dem Moment des Einschiebens der Plattensätze in das Akkumulatorgehäuse eingesetzt werden. Insbesondere kann das mechanische Beaufschlagen zur Erzeugung des Musters spaltförmiger Vertiefungen auch erst dann erfolgen, wenn die Elektrodenplatte bereits in das Separatormaterial eingetascht ist.

Die eingangs genannte Aufgabe wird gemäß Anspruch 9 ferner gelöst durch eine Elektrodenplatte eines elektrochemischen Akkumulators, wobei die Elektrodenplatte ein im Wesentlichen ebenes Bleigitter mit einer Vielzahl von Gitterstäben und einer Vielzahl von zwischen den Gitterstäben gebildeten fensterartigen Aussparungen und in die Aussparungen und/oder auf die Gitterstäbe des Bleigitters eingebrachte aktive Masse aufweist, dadurch gekennzeichnet, dass die aktive Masse ein künstlich erzeugtes Muster spaltförmiger Vertiefungen auf ihrer Oberfläche aufweist, wobei das Muster spaltförmiger Vertiefungen in der aktiven Masse durch mechanisches Beaufschlagen des mit der aktiven Masse versehenen Bleigitters erfolgte, und zwar derart, dass die Vertiefungen von der äußeren Oberfläche der aktiven Masse aus in die Tiefe gehen, und dass das Muster spaltförmiger Vertiefungen eine unregelmäßige, netzwerkartige Struktur bildet. Die eingangs genannte Aufgabe wird gemäß Anspruch 10 ferner gelöst durch einen elektrochemischen Akkumulator mit wenigstens einer Elektrodenplatte der zuvor genannten Art.

Die Erfindung wird nachfolgend anhand von Ausführungsbeispielen unter Verwendung von Zeichnungen näher erläutert.

Es zeigen:
- Fig. 1:: einen Akkumulator sowie dessen Bauteile in einer explosionsartigen Darstellung und
- Fig. 2:: ein Bleigitter und
- Fig. 3:: ein mit einer aktiven Masse versehenes Bleigitter und
- Fig. 4:: das Eintaschen eines mit einer aktiven Masse versehenen Bleigitters in einem Separator und
- Fig. 5:: eine Anlage zur Herstellung einer Elektrodenplatte und
- Fig. 6-9:: Ausführungsformen eines Beaufschlagungswerkzeugs mit abgerundetem Profil und
- Fig. 10:: eine Stempelpresse.

In den Figuren werden gleiche Bezugszeichen für einander entsprechende Elemente verwendet.

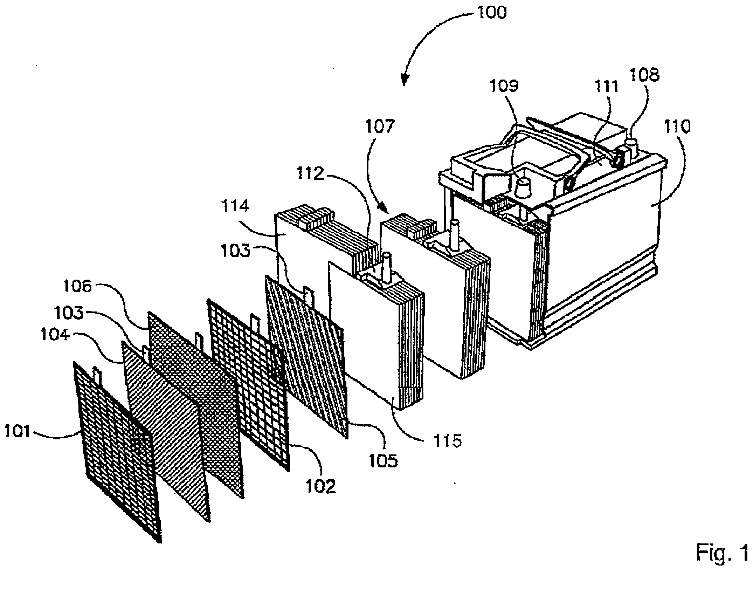

Anhand der Fig. 1 sei zunächst der prinzipielle Aufbau eines erfindungsgemäßen Akkumulators 100 beispielhaft erläutert. Der Akkumulator 100 kann insbesondere als Blei-Säure-Batterie mit flüssigem Elektrolyten, z.B. in Form von Schwefelsäure, ausgebildet sein. Der Akkumulator 100 weist ein Gehäuse 110 auf, in dem einer oder mehrere Plattenblöcke 107 angeordnet sind. Der Akkumulator 100 weist eine entsprechend seiner Zellenzahl festgelegte Anzahl von Plattenblöcken 107 auf. Die Plattenblöcke 107 sind jeweils in einzelnen durch Zwischenwände voneinander getrennten Aufnahmekammern des Gehäuses 110 angeordnet. Innerhalb des Gehäuses 110 sind die Plattenblöcke 107 durch in der Fig. 1 nicht dargestellte interne Verbinderelemente untereinander zu einer Reihenschaltung verbunden. Die positiven Platten des einen endseitigen Plattenblocks und die negativen Platten des anderen endseitigen Plattenblocks sind mit jeweiligen äußeren Anschlusspolen 108, 109, die sich in einem Deckelteil 111 des Akkumulatorgehäuses 110 befinden, elektrisch verbunden. Durch die Anschlusspole 108, 109 wird die elektrische Energie des Akkumulators 100 für elektrische Energieverbraucher bereitgestellt.

Die Plattenblöcke 107 weisen jeweils alternierend positive und negative Elektrodenplatten auf. Die negative Elektrodenplatten sind als negativer Plattensatz 115 wiedergegeben, die positiven Elektrodenplatten als positiver Plattensatz 114. In der Fig. 1 sind beispielhaft noch einzelne Elektrodenplatten dargestellt, nämlich eine negative Elektrodenplatte 105, die ein negatives ebenes Bleigitter 102 aufweist, und eine positive Elektrodenplatte 104, die ein positives ebenes Bleigitter 101 aufweist. Die in Fig. 1 dargestellte positive Elektrodenplatte 104 und die negative Elektrodenplatte 105 weist bereits eine Pastierung mit aktiver Masse auf. Diese deckt die einzelnen Gitterstäbe und Aussparungen ab. Das positive und/oder das negative Bleigitter weist eine Vielzahl von Gitterstäben und eine Vielzahl von zwischen den Gitterstäben gebildeten fensterartigen Aussparungen auf. Das positive und/oder das negative Bleigitter 101, 102 kann z.B. durch einen Stanzprozess hergestellt werden, oder durch andere Verfahren wie Gießen und/oder Walzen.

Die positive Elektrodenplatte 104 ist zusätzlich über ein Separatormaterial 106 von der negativen Elektrodenplatte 105 getrennt. Insbesondere kann das Separatormaterial 106 zu einer Taschenform ausgebildet sein, die die positive Elektrodenplatte 104 aufnimmt und gegenüber benachbarten Elektrodenplatten separiert.

Die positiven Elektrodenplatten 104 weisen jeweilige Anschlussfahnen 103 auf, über die die Elektrodenplatten in dem positiven Plattensatz 114 untereinander in einer Parallelschaltung verbunden sind. Die negativen Elektrodenplatten 105 weisen jeweilige Anschlussfahnen 103 auf, über die die Elektrodenplatten in dem negativen Plattensatz 115 untereinander in einer Parallelschaltung verbunden sind. Die Verbindung kann durch einen in Fig. 1 erkennbaren Verbinder 112, der auf die Anschlussfahnen 103 gelötet oder geschweißt wird, erfolgen.

Der Akkumulator 100 gemäß Fig. 1 kann insbesondere eine oder mehrere erfindungsgemäße Elektrodenplatten aufweisen, z.B. in Form der positiven Elektrodenplatten 104.

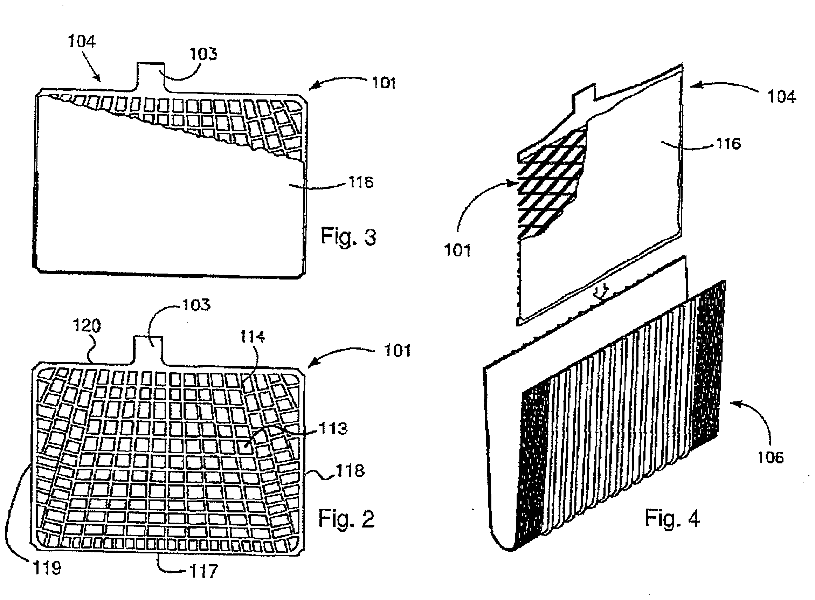

Die Fig. 2 zeigt beispielhaft ein positives Bleigitter 101 in einer Draufsicht. Erkennbar ist, dass das Bleigitter 101 eine Vielzahl von Gitterstäben 114 aufweist, zwischen denen eine Vielzahl von fensterartigen Aussparungen 113 vorhanden ist. Zur besseren Handhabbarkeit und zur mechanischen Stabilisierung sowie zur Verbesserung der elektrischen Eigenschaften kann das Bleigitter 101 am äußeren Rand eines, mehrere oder alle der nachfolgend genannten Rahmenteile aufweisen: oberes Rahmenteil 120, linkes Seitenrahmenteil 119, unteres Rahmenteil 117, rechtes Seitenrahmenteil 118.

Die Fig. 3 zeigt das Bleigitter 101 aus Fig. 2, nachdem es zumindest teilweise bereits mit aktiver Masse, die in der Regel in pastöser Form aufgebracht wird, bedeckt wurde. Dieser Vorgang wird auch als Pastieren bezeichnet. Die Fig. 4 zeigt das mit der aktiven Masse versehene Bleigitter 103 gemäß Fig. 3 beim Einsetzen in einen taschenförmigen Separator 106.

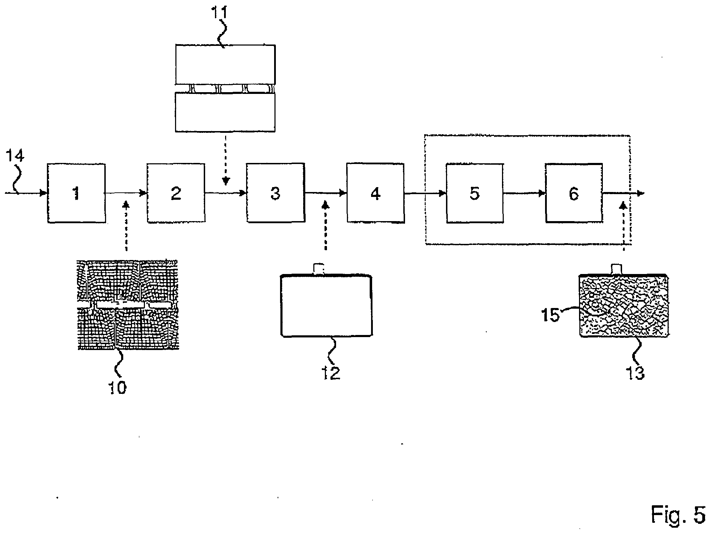

Die Fig. 5 zeigt in schematischer Darstellung eine Anlage zur Herstellung einer Elektrodenplatte, insbesondere einer positiven Elektrodenplatte 104, wie sie zuvor beschrieben wurde. Die Anlage weist verschiedene Stationen 1, 2, 3, 4, 5, 6 auf, nämlich eine Bleigitter-Erzeugungsstation 1, eine Pastierstation 2, eine Vereinzelungsstation 3, eine Lagerstation 4, eine Vertiefungsbildungsstation 5 sowie eine Glättungsstation 6. Die einzelnen Stationen 1, 2, 3, 4, 5, 6 sind, wie in der Fig. 5 dargestellt, hintereinander angeordnet, so dass der Bleigitter-Erzeugungsstation 1 zugeführtes Rohmaterial 14 schrittweise zu der herauskommenden Elektrodenplatte verarbeitet wird.

Die Bleigitter-Erzeugungsstation 1 verarbeit zugeführtes Rohblei zu einem zweisträngigen Gitterband 10. Dies kann in der Bleigitter-Erzeugungsstation 1 durch einen Gießprozess, einen Walzprozess und/oder einen Stanzprozess erfolgen. Das zweisträngige Gitterband 10 weist einen oberen und einen unteren Strang von Bleigittern 101 auf, die noch zusammenhängend sind. Der obere und der untere Strang sind außerdem über die Anschlussfahnen 103 der Bleigitter 101 miteinander verbunden. Das zweisträngige Gitterband 10 ist zu einem späteren Zeitpunkt noch aufzutrennen in die einzelnen Bleigitter 101.

Zunächst kann jedoch in der Pastierstation 2 ein Einbringen der aktiven Masse erfolgen. Es entsteht das in Fig. 5 dargestellte zweisträngige pastierte Gitterband 11.

Gemäß Fig. 5 folgt auf die Pastierstation 2 bereits die Vereinzelungsstation 3. Dies ist jedoch nur eine mögliche Ausführungsform der dargestellten Anlage. Die Vereinzelungsstation kann z.B. alternativ auch erst nach der Glättungsstation 6 angeordnet sein. Zunächst sei jedoch von der in Fig. 5 dargestellten Ausführungsform ausgegangen. In der Vereinzelungsstation 3 werden aus dem zweisträngigen pastierten Gitterband 11 die einzelnen mit der aktiven Masse versehenen Bleigitter 104 abgetrennt. Diese sind in Fig. 5 auch mit dem Bezugszeichen 12 bezeichnet.

Vor dem Zuführen der Elektrodenplatten 12 zu der Vertiefungsbildungsstation 5 kann noch eine Vortrocknung der Elektrodenplatte 12 bzw. insbesondere deren aktiver Masse erfolgen, sowie gegebenenfalls das Curing. Hierfür kann die Elektrodenplatte 12 zwischengelagert werden, z.B. in der Lagerstation 4. Alternativ kann auch gleich eine Weiterverarbeitung in der Vertiefungsbildungsstation 5 erfolgen.

In der Vertiefungsbildungsstation 5 werden die spaltförmigen Vertiefungen in der aktiven Masse durch mechanisches Beaufschlagen der Elektrodenplatte 12 erzeugt. Danach wird die Elektrodenplatte 12 in der Glättungsstation 6 bearbeitet, derart, dass wiederum eine äußere Glättung der aktiven Masse erfolgt, z.B. durch Durchführen der Elektrodenplatte 12 durch ein Walzenpaar. Schließlich wird aus der Glättungsstation 6 eine Elektrodenplatte 13 mit dem in Fig. 5 erkennbaren Muster 15 spaltförmiger Vertiefungen ausgegeben.

Das Eintaschen der Elektrodenplatte in den Separator 106 kann wahlweise vor oder nach der Bearbeitung in der Vertiefungsbildungsstation 5 erfolgen. Hierfür weist die Anlage zusätzlich noch eine an entsprechender Stelle angeordnete, in der Fig. 5 nicht dargestellte, Eintaschstation auf, z.B. in Form der erwähnten Taschenmaschine.

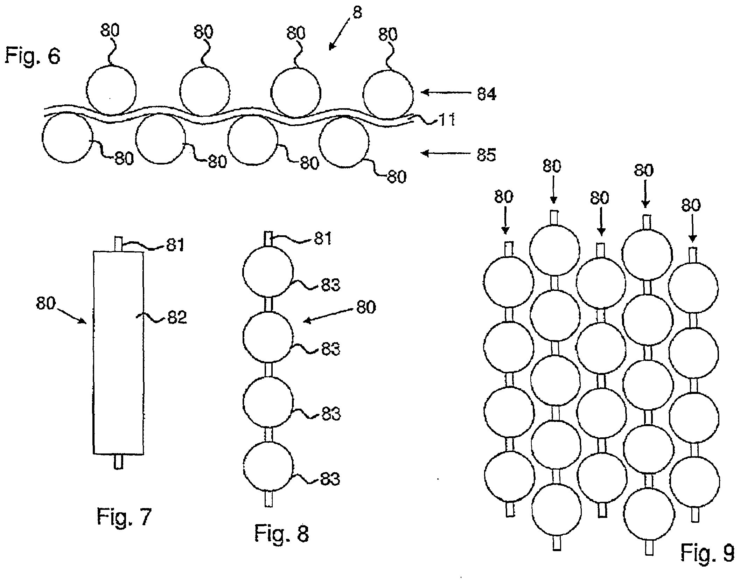

Sofern die Vereinzelungsstation 3 erst hinter der Glättungsstation 6 angeordnet ist, wird das Gitterband 11 z.B. mit einer kontinuierlichen Bewegung durch das Beaufschlagungswerkzeug der Vertiefungsbildungsstation 5 geführt. Das Beaufschlagungswerkzeug kann dann z.B. wie nachfolgend anhand der Fig. 6 bis 9 erläutert ausgebildet sein.

Die Vertiefungsbildungsstation 5 kann mit einer Einhausung 7 umgeben sein, um Emissionen in die Umgebung, z.B. Bleistaub, abzufangen. Innerhalb der Einhausung 7 kann zusätzlich noch die Glättungsstation 6 angeordnet sein.

Die Fig. 6 bis 9 zeigen Ausführungsformen des Beaufschlagungswerkzeugs der Vertiefungsbildungsstation 5, mit dem ein mechanisches Beaufschlagen des mit der aktiven Masse versehenen Bleigitters erfolgt, um das Muster spaltförmiger Vertiefungen in der aktiven Masse zu erzeugen. Die Fig. 6 zeigt eine Ausführungsform eines Bearbeitungswerkzeugs 8 in seitlicher Ansicht. Das Bearbeitungswerkzeug 8 weist einen oberen Satz 84 von Rollen 80 sowie einen unteren Satz 85 von Rollen 80 auf. Die Rollen 80 des oberen und des unteren Satzes 84, 85 sind in Vertikalrichtung dicht beieinander angeordnet oder überlappen sogar. Die Rollen 80 eines jeweiligen Satzes 84, 85 weisen in Horizontalrichtung einen größeren Abstand voneinander auf als in Vertikalrichtung. Der obere Satz 84 von Rollen 80 ist gegenüber dem unteren Satz 85 von Rollen 80 versetzt angeordnet. Ein durch die Rollen 80 hindurch geführtes Gitterband 11, das in der Fig. 6 ebenfalls in seitlicher Ansicht dargestellt ist, wird hierdurch in die in Fig. 6 erkennbare Wellenform gebogen. Durch hinter dem Austritt des Gitterbands 11 aus dem Beaufschlagungswerkzeug 8 vorhandene Walzen kann die Wellenform wieder geglättet werden in ein im Wesentlichen ebenes Gitterband, aus dem ebene Elektrodenplatten hergestellt werden können. Das Beaufschlagungswerkzeug gemäß Fig. 6 eignet sich besonders für einen kontinuierlichen Vorschub des Bleigitters bzw. des Gitterbands 11.

Die Fig. 7 bis 9 zeigen Ausführungsformen von Teilen des Beaufschlagungswerkzeugs 8 in einer Ansicht von oben, d. h auf den oberen Satz 84 von Rollen. Gemäß Fig. 7 weisen die Rollen 80 jeweils zylindrische Beaufschlagungskörper 82, die auf einer Drehachse 81 gelagert sind. In einer Ausführungsform gemäß Fig. 8 weisen die Rollen 80 auf einer drehbaren Welle 81 angeordnete kugelförmige Beaufschlagungskörper 83 auf. Die Beaufschlagungskörper 83 können statt der Kugelform auch eine andere Form wie eine elliptische oder eine eckige Form aufweisen.

Gemäß Fig. 9 sind mehrere der in Fig. 8 dargestellten Rollen 80 mit kugelförmigen Beaufschlagungskörpern nebeneinander angeordnet, wobei die einzelnen kugelförmigen Beaufschlagungskörper benachbarter Reihen zueinander versetzt angeordnet sind. Die Fig. 9 zeigt z.B. die obere Ebene 84 des Beaufschlagungswerkzeugs gemäß Fig. 6. Die untere Ebene 85 kann vergleichbar ausgebildet sein.

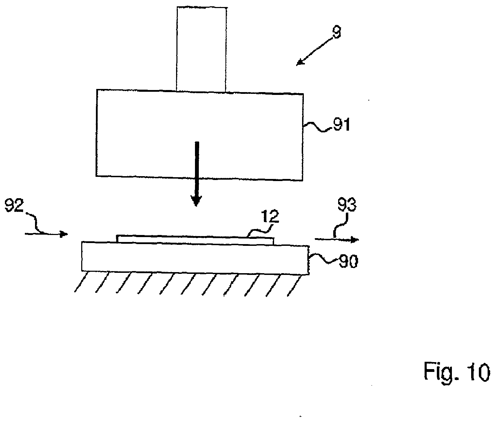

Die Fig. 10 zeigt eine Ausführungsform eines Beaufschlagungswerkzeugs als Stempelpresse 9. Diese Ausführungsform eignet sich besonders für eine diskontinuierliche Bewegung der Elektrodenplatte 12, z.B. für bereits vereinzelte Elektrodenplatten 12. Die zu bearbeitende Elektrodenplatte 12 wird entsprechend dem Pfeil 92 zugeführt und auf einem Unterwerkzeug 90 der Stempelpresse 9 abgelegt. Das Unterwerkzeug 90 kann, wie in der Fig. 10 erkennbar ist, ortsfest angeordnet sein, kann aber auch als beweglicher Unterstempel ausgebildet sein. Ein Oberstempel 91 wird entsprechend dem dargestellten Pfeil nach unten auf die Elektrodenplatte 12 bewegt. Die Elektrodenplatte 12 wird zwischen dem Oberstempel 91 und dem Unterwerkzeug 90 gepresst. Die für die Pressung der Elektrodenplatte an dem Oberstempel 91 und dem Unterwerkzeug 90 vorgesehenen Flächen weisen dabei eine Strukturierung auf, die zur Erzeugung des Musters spaltförmiger Vertiefungen in der aktiven Masse der Elektrodenplatte 12 führt. Anschließend wird der Oberstempel 91 wieder nach oben gefahren, und die Elektrodenplatte 12 wird entsprechend Pfeil 93 fortbewegt.

## Patentansprüche

1. Verfahren zur Herstellung einer Elektrodenplatte (12, 13, 104, 105) eines elektrochemischen Akkumulators (100) mit den in folgender Reihenfolge ausgeführten Schritten:
a) Herstellen eines im Wesentlichen ebenen Bleigitters (101, 102) mit einer Vielzahl von Gitterstäben (114) und einer Vielzahl von zwischen den Gitterstäben (114) gebildeten fensterartigen Aussparungen (113),
b) Einbringen aktiver Masse (116) in die Aussparungen (113) und/oder auf die Gitterstäbe (114) des Bleigitters (101, 102),
c) Erzeugen eines Musters spaltförmiger Vertiefungen (15) in der aktiven Masse (116)
**dadurch gekennzeichnet, dass**
das Muster spaltförmiger Vertiefungen (15) in der aktiven Masse (116) durch mechanisches Beaufschlagen des mit der aktiven Masse (116) versehenen Bleigitters (101, 102) erfolgt, und zwar derart, dass die Vertiefungen (15) von der äußeren Oberfläche der aktiven Masse (116) aus in die Tiefe gehen, und dass das Muster spaltförmiger Vertiefungen (15) eine unregelmäßige, netzwerkartige Struktur bildet.

2. Verfahren nach Anspruch 1,
wobei das Muster spaltförmiger Vertiefungen (15) nur durch mechanische Beaufschlagung der aktiven Masse (116) oder nur durch eine Kombination von mechanischer Beaufschlagung der aktiven Masse (116) und Verformen des mit der aktiven Masse (116) versehenen Bleigitters (101, 102) erfolgt.

3. Verfahren nach einem der vorhergehenden Ansprüche,
wobei das Erzeugen des Musters spaltförmiger Vertiefungen (15) bei oder nach der Vortrocknung oder bei oder nach dem Curing der aktiven Masse (116) erfolgt.

4. Verfahren nach einem der vorhergehenden Ansprüche,
wobei die mechanische Beaufschlagung durch abgerundete Profilkonturen und/oder scharfkantige Profile erfolgt.

5. Verfahren nach einem der vorhergehenden Ansprüche,
wobei bei der mechanischen Beaufschlagung das mit der aktiven Masse (116) versehene Bleigitter (101, 102) mit einer kontinuierlichen Bewegung relativ zu einem Beaufschlagungswerkzeug (8, 9) bewegt wird und/oder diskontinuierlich bewegt wird, derart, dass das mit der aktiven Masse (116) versehene Bleigitter (101, 102) während der mechanischen Beaufschlagung ortsfest ist und vor und nach der mechanischen Beaufschlagung relativ zu dem Beaufschlagungswerkzeug (8, 9) bewegt wird.

6. Verfahren nach einem der vorhergehenden Ansprüche,
wobei die Vertiefungen (15) in horizontaler Erstreckungsrichtung und/oder in vertikaler Erstreckungsrichtung der Elektrodenplatte (12, 13, 104, 105) erzeugt werden, jeweils bezogen auf die Einbaulage der Elektrodenplatte (12, 13, 104, 105) in einem elektrochemischen Akkumulator (100) in spezifikationsgemäßer Normallage des Akkumulators (100).

7. Verfahren nach einem der vorhergehenden Ansprüche,
wobei das Beaufschlagungswerkzeug (8, 9) zur mechanischen Beaufschlagung des mit der aktiven Masse (116) versehenen Bleigitters (101, 102) Rollen (80), Walzen (82) und/oder Kugeln (83) aufweist, oder einen Ober- und einen Unterstempel (90, 91), zwischen denen das mit der aktiven Masse (116) versehene Bleigitter (101, 102) gepresst wird.

8. Anlage konzipiert zur Herstellung einer Elektrodenplatte (12, 13, 104, 105) eines elektrochemischen Akkumulators (100), wobei die Elektrodenplatte (12, 13, 104, 105) ein im Wesentlichen ebenes Bleigitter (101, 102) mit einer Vielzahl von Gitterstäben (114) und einer Vielzahl von zwischen den Gitterstäben (114) gebildeten fensterartigen Aussparungen (113) und in die Aussparungen (113) und/oder auf die Gitterstäbe (114) des Bleigitters eingebrachte aktive Masse (116) aufweist, wobei die Anlage wenigstens eine Bleigitter-Erzeugungsstation (1) konzipiert zur Herstellung des Bleigitters (101, 102), eine Pastierstation (2) konzipiert zur Einbringung der aktiven Masse (116) und eine Vertiefungsbildungsstation (5) aufweist, **dadurch gekennzeichnet, dass** die Vertiefungsbildungsstation (5) zum Erzeugen eines Musters spaltförmiger Vertiefungen (15) in der aktiven Masse (116) durch mechanisches Beaufschlagen des mit der aktiven Masse (116) versehenen Bleigitters (101, 102) konzipiert ist, und zwar derart, dass die Vertiefungen (15) von der äußeren Oberfläche der aktiven Masse (116) aus in die Tiefe gehen, und dass das Muster spaltförmiger Vertiefungen (15) eine unregelmäßige, netzwerkartige Struktur bildet.

9. Elektrodenplatte (12, 13, 104, 105) eines elektrochemischen Akkumulators (100), wobei die Elektrodenplatte (12, 13, 104, 105) ein im Wesentlichen ebenes Bleigitter mit einer Vielzahl von Gitterstäben (114) und einer Vielzahl von zwischen den Gitterstäben (114) gebildeten fensterartigen Aussparungen (113) und in die Aussparungen (113) und/oder auf die Gitterstäbe (114) des Bleigitters (101, 102) eingebrachte aktive Masse (116) aufweist, **dadurch gekennzeichnet, dass** die aktive Masse (116) ein künstlich erzeugtes Muster spaltförmiger Vertiefungen (15) auf ihrer Oberfläche aufweist, wobei das Muster spaltförmiger Vertiefungen (15) in der aktiven Masse (116) durch mechanisches Beaufschlagen des mit der aktiven Masse (116) versehenen Bleigitters (101, 102) erfolgte, und zwar derart, dass die Vertiefungen (15) von der äußeren Oberfläche der aktiven Masse (116) aus in die Tiefe gehen, und dass das Muster spaltförmiger Vertiefungen (15) eine unregelmäßige, netzwerkartige Struktur bildet.

10. Elektrochemischer Akkumulator (100) mit wenigstens einer Elektrodenplatte (12, 13, 104, 105) nach Anspruch 10.

## Claims

1. Method for the production of an electrode plate (12, 13, 104, 105) of an electrochemical accumulator (100), comprising the steps, carried out in the following sequence, of:
a) producing a substantially flat lead accumulator grid (101, 102) having a multiplicity of lattice bars (114), and a multiplicity of window-type clearances (113) formed between the lattice bars (114);
b) incorporating an active mass (116) in the clearances (113) and/or on the lattice bars (114) of the lead accumulator grid (101, 102);
c) generating a pattern of gap-shaped depressions (15) in the active mass (116),
**characterized in that**
the pattern of gap-shaped depressions (15) in the active mass (116) is performed by mechanical impingement of the lead accumulator grid (101, 102) that is provided with the active mass (116), specifically in such a manner that the depressions (15) run from the external surface of the active mass (116) into the depth, and that the pattern of gap-shaped depressions (15) forms an irregular, network-type structure.

2. Method according to claim 1,
wherein the pattern of gap-shaped depressions (15) is performed only by mechanical impingement of the active mass (116), or only by a combination of mechanically impinging the active mass (116) and deforming the lead accumulator grid (101, 102) provided with the active mass (116).

3. Method according to one of the preceding claims,
wherein the generation of the pattern of gap-shaped depressions (15) is performed in or after the preliminary drying of the active mass (116), or in or after the curing of the active mass (116).

4. Method according to one of the preceding claims,
wherein the mechanical impingement is performed by rounded profile contours and/or sharp-edged profiles.

5. Method according to one of the preceding claims,
wherein the lead accumulator grid (101, 102) provided with the active mass (116) in the mechanical impingement is moved by way of a continuous movement relative to an impingement tool (8, 9), and/or is moved discontinuously in such a manner that the lead accumulator grid (101, 102) provided with the active mass (116) during the mechanical impingement is locationally fixed, and prior to and after the mechanical impingement is moved relative to the impingement tool (8, 9).

6. Method according to one of the preceding claims,
wherein the depressions (15) are generated in the horizontal direction of extent and/or in the vertical direction of extent of the electrode plate (12, 13, 104, 105), in each case in relation to the installed position of the electrode plate (12, 13, 104, 105) in an electrochemical accumulator (100) in a normal position of the accumulator (100) as specified.

7. Method according to one of the preceding claims,
wherein the impingement tool (8, 9) for mechanically impinging the lead accumulator grid (101, 102) provided with the active mass (116) has rollers (80), cylinders (82), and/or spheres (83), or an upper and a lower die (90, 91), the lead accumulator grid (101, 102) provided with the active mass (116) being pressed therebetween.

8. Installation conceived for the production of an electrode plate (12, 13, 104, 105) of an electrochemical accumulator (100), wherein the electrode plate (12, 13, 104, 105) has a substantially flat lead accumulator grid (101, 102) having a multiplicity of lattice bars (114), and a multiplicity of window-type clearances (113) formed between the lattice bars (114), and an active mass (116) incorporated in the clearances (113) and/or on the lattice bars (114) of the lead accumulator grid, wherein the installation has at least one lead accumulator grid generation station (1), conceived for the production of the lead accumulator grid (101, 102), a pasting station (2), conceived for incorporating the active mass (116), and a depression formation station (5),
**characterized in that**
the depression formation station (5) is conceived for generating a pattern of gap-shaped depressions (15) in the active mass (116) by mechanically impinging the lead accumulator grid (101, 102) provided with the active mass (116), specifically in such a manner that the depressions (15) run from the external surface of the active mass (116) into the depth, and that the pattern of gap-shaped depressions (15) forms an irregular, network-like structure.

9. Electrode plate (12, 13, 104, 105) of the electrochemical accumulator (100), wherein the electrode plate (12, 13, 104, 105) has a substantially planar lead accumulator grid having a multiplicity of lattice bars (114), and a multiplicity of window-type clearances (113) formed between the lattice bars (114), and an active mass (116) incorporated in the clearances (113) and/or on the lattice bars (114) of the lead accumulator grid (101, 102),
**characterized in that**
the active mass (116) on the surface thereof has an artificially generated pattern of gap-shaped depressions (15), wherein the pattern of gap shaped depressions (15) in the active mass (116) was performed by mechanically impinging the lead accumulator grid (101, 102) provided with the active mass (116), specifically in such a manner that the depressions (15) run from the external surface of the active mass (116) into the depth, and that the pattern of gap-shaped depressions (15) forms an irregular, network-like structure.

10. Electrochemical accumulator (100) having at least one electrode plate (12, 13, 104, 105) according to claim 10.

## Revendications

1. Procédé de fabrication d'une plaque d'électrode (12, 13, 104, 105) pour accumulateur électrochimique (100), le procédé présentant les étapes ci-dessous, exécutées dans la succession indiquée:
a) fabrication d'une grille (101, 102) en plomb, essentiellement plane, présentant plusieurs barreaux de grille (114) et plusieurs découpes (13) en forme de fenêtres formées entre les barreaux de grille (114),
b) placement d'une pâte active (116) dans les découpes (113) et/ou sur les barreaux (114) de la grille de plomb (101, 102),
c) formation d'un motif de creux (15) en forme d'interstices dans la pâte active (116),
**caractérisé en ce que**
le motif de creux (15) en forme d'interstices dans la pâte active (116) est formé mécaniquement sur la grille de plomb (101, 102) dotée de la pâte active (116), de telle sorte que les creux (15) s'étendent en profondeur partant de la surface extérieure de la pâte active (116) et **en ce que** le motif de creux (15) en forme d'interstices forme une structure irrégulière en réseau.

2. Procédé selon la revendication 1,
dans lequel le motif de creux (15) en forme d'interstices est formé uniquement en agissant mécaniquement sur la pâte active (116) ou uniquement par une combinaison d'une intervention mécanique sur la pâte active (116) et d'une déformation de la grille de plomb (101, 102) dotée de la pâte active (116).

3. Procédé selon l'une des revendications précédentes,
dans lequel la formation du motif de creux (15) en forme d'interstices a lieu lors ou après le pré-séchage ou lors ou après le durcissement de la pâte active (116).

4. Procédé selon l'une des revendications précédentes,
dans lequel l'intervention mécanique est réalisée par des contours profilés arrondis et/ou des contours profilés à arêtes vives.

5. Procédé selon l'une des revendications précédentes,
dans lequel lors de l'intervention mécanique, la grille de plomb (101, 102) dotée de la pâte active (116) est déplacée en continu par rapport à un outil d'intervention (8, 9) et/ou est déplacée de manière discontinue de telle sorte que pendant l'intervention mécanique, la grille de plomb (101, 102) dotée de la pâte active (116) soit immobile et soit déplacée par rapport à l'outil d'intervention (8, 9) avant et après l'intervention mécanique.

6. Procédé selon l'une des revendications précédentes,
dans lequel les creux (15) sont formés dans la direction de extension horizontale et/ou dans la direction d'extension verticale de la plaque d'électrode (12, 13, 104, 105), par rapport à la position de montage de la plaque d'électrode (12, 13, 104, 105) dans un accumulateur électrochimique (100), dans la position normale, conforme aux spécifications, de l'accumulateur (100).

7. Procédé selon l'une des revendications précédentes,
dans lequel pour agir mécaniquement sur la grille de plomb (101, 102) dotée de la pâte active (116), l'outil d'intervention (8, 9) présente des rouleaux (80), des cylindres (82) et/ou des billes (83) ou un poussoir supérieur et un poussoir inférieur (90, 91) contre lesquels la grille de plomb (101, 102) dotée de la pâte active (116) est repoussée.

8. Installation conçue pour fabriquer une plaque d'électrode (12, 13, 104, 105) pour accumulateur électrochimique (100), la plaque d'électrode (12, 13, 104, 105) présentant une grille (101, 102) en plomb, essentiellement plane, présentant plusieurs barreaux de grille (114) et plusieurs découpes (13) en forme de fenêtres formées entre les barreaux de grille (114) ainsi qu'une pâte active (116) dans les découpes (113) et/ou sur les barreaux (114) de la grille de plomb, l'installation présentant au moins un poste (1) de formation d'une grille de plomb conçu pour fabriquer la grille de plomb (101, 102), un poste d'induction (2) conçu pour appliquer la pâte active (116) et un poste (5) de formation de creux,
**caractérisé en ce que**
le poste (5) de formation de creux est conçu pour former un motif de creux (15) en forme d'interstices dans la pâte active (116) par intervention mécanique sur la grille de plomb (101, 102) dotée de la pâte active (116), de telle sorte que les creux (15) s'étendent en profondeur partant de la surface extérieure de la pâte active (116) et **en ce que** le motif de creux (15) en forme d'interstices forme une structure irrégulière en réseau.

9. Plaque d'électrode (12, 13, 104, 105) d'un accumulateur électrochimique (100), la plaque d'électrode (12, 13, 104, 105) présentant une grille (101, 102) en plomb, essentiellement plane, présentant plusieurs barreaux de grille (114) et plusieurs découpes (13) en forme de fenêtres formées entre les barreaux de grille (114) ainsi qu'une pâte active (116) dans les découpes (113) et/ou sur les barreaux (114) de la grille de plomb,
**caractérisé en ce que**
la pâte active (116) présente un motif de creux (15) en forme d'interstices formé artificiellement sur sa surface,
**en ce que** le motif de creux (15) en forme d'interstices dans la pâte active (116) est formé mécaniquement sur la grille de plomb (101, 102) dotée de la pâte active (116), de telle sorte que les creux (15) s'étendent en profondeur partant de la surface extérieure de la pâte active (116) et **en ce que** le motif de creux (15) en forme d'interstices forme une structure irrégulière en réseau.

10. Accumulateur électrochimique (100) présentant au moins une plaque d'électrode (12, 13, 104, 105) selon la revendication 10.
